(19) Europäisches Patentamt
European Patent Office
Office européen des brevets

(11) EP 2 317 216 A2

(12) **EUROPEAN PATENT APPLICATION**

(43) Date of publication:
**04.05.2011 Bulletin 2011/18**

(51) Int Cl.:
**F21V 5/04** (2006.01)   **G02B 3/02** (2006.01)

(21) Application number: **10170179.5**

(22) Date of filing: **20.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **29.10.2009 CN 200910309021**

(71) Applicant: **Foxsemicon Integrated Technology, Inc.**
**Taiwan 350 (TW)**

(72) Inventor: **Chen, Tien-Pao**
**350, Miao-Li Hsien (TW)**

(74) Representative: **Wilson, Peter**
**Murgitroyd & Company**
**165-169 Scotland Street**
**Glasgow G5 8PL (GB)**

(54) **Optical Lens**

(57)    An exemplary optical lens (10) for modulating light emitted from a light source (101) to form a circular light field includes a first surface (110), and a second surface (120) opposite to the first surface (110). The first surface (110) defines a recess (111) for receiving the light source (101). The recess (111) has a side surface (1112) as a light entrance surface. The second surface (120) is a light exit surface. The side surface (1112) and the second surface (120) cooperatively modulate the light from the light source (101), such that an angle of a full width at half maximum of the intensity of a light field, which is formed by the light emitted from the optical lens (10), is larger than 80 degrees.

FIG. 2

EP 2 317 216 A2

**Description**

BACKGROUND

1. Technical Field

The present disclosure relates to optics, and particularly to an optical lens.

2. Description of Related Art

Currently, light emitting diodes (LEDs) are preferred for use in illumination devices such as street lamps due to their long lifespan, and wide color range. However, the LED has lower luminescence uniformity. Therefore, the illumination distribution of the illumination device with the LED is not uniform. In order to uniformly illuminate, there is a need to modulate light emitted from the LED.

Therefore, an optical lens for modulating light is desired to overcome the above-mentioned problems.

BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, all the views are schematic, and like reference numerals designate corresponding parts throughout the several views.

FIG. 1 is a schematic view of an optical lens according to a first embodiment.

FIG. 2 is a cross-sectional view of the optical lens of FIG. 1, taken along a line II-II thereof.

FIG. 3 is a diagram of a full width at half maximum (FWHM) of a light field formed by light passing through the optical lens of FIG. 1.

FIG. 4 is a diagram of intensity distribution of the light field formed by light passing through the optical lens of FIG. 1.

FIG. 5 is a simulated diagram of illuminance of the light field formed by light passing through the optical lens of FIG. 1.

FIG. 6 is a cross-sectional view of an optical lens according to a second embodiment.

FIG. 7 is a diagram of intensity distribution of a light field formed by light passing through the optical lens of FIG. 6.

FIG. 8 is a simulated diagram of illuminance of the light field formed by light passing through the optical lens of FIG. 6.

FIG. 9 is a cross-sectional view of an optical lens according to a third embodiment.

FIG. 10 is a diagram of intensity distribution of a light field formed by light passing through the optical lens of FIG. 9.

FIG. 11 is a simulated diagram of illuminance of the light field formed by light passing through the optical lens of FIG. 9.

FIG. 12 is a cross-sectional view of an optical lens according to a fourth embodiment.

FIG. 13 is a diagram of intensity distribution of a light field formed by light passing through the optical lens of FIG. 12.

FIG. 14 is a simulated diagram of illuminance of the light field formed by light passing through the optical lens of FIG. 12.

FIG. 15 is a cross-sectional view of an optical lens according to a fifth embodiment.

FIG. 16 is a diagram of intensity distribution of a light field formed by light passing through the optical lens of FIG. 15.

FIG. 17 is a simulated diagram of illuminance of the light field formed by light passing through the optical lens of FIG. 15.

DETAILED DESCRIPTION

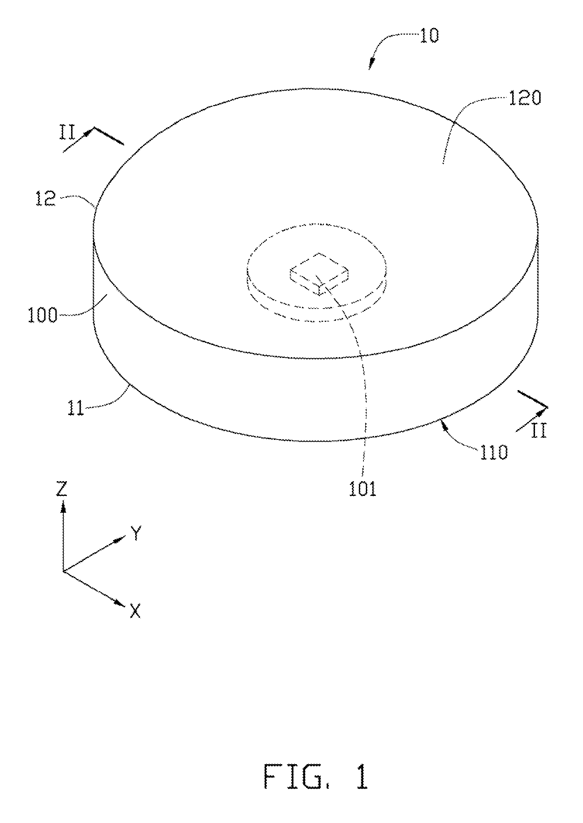

Referring to FIG. 1, an optical lens 10, in accordance with a first embodiment, is shown. The optical lens 10 is configured for modulating light emitted from a light source 101 to make light passing through the optical lens 10 (i.e. light modulated by the optical lens 10) uniform. The optical lens 10 includes a main body 100. The main body 100 includes a first end portion 11, and a second end portion 12 opposite to the first end portion 11. The first end portion 11 includes a first surface 110. The second end portion 12 includes a second surface 120. In the present embodiment, the light source 101 is an LED, and the optical lens 10 makes light passing through the optical lens 10 form a circular light field.

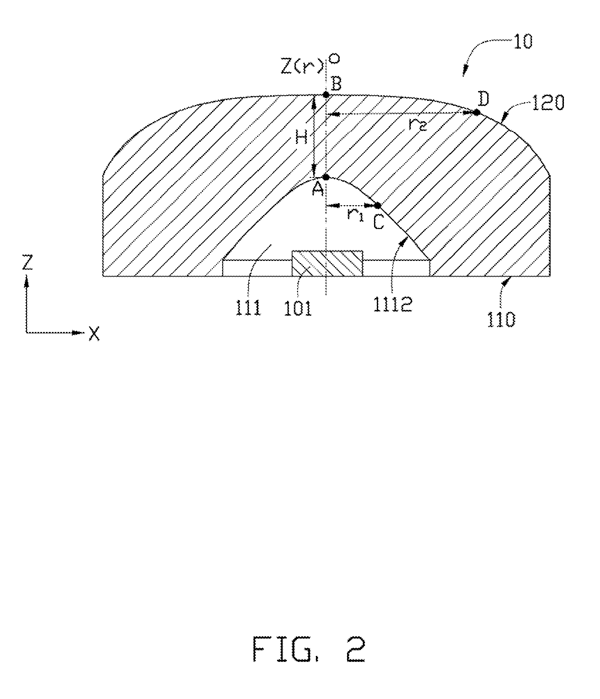

Referring FIG. 2, the first surface 110 defines a recess 111 for receiving the light source 101. The light emitted from the light source 101 enters into the main body 100 via the side surface 1112 of the recess 111. That is, the side surface 1112 is the light entrance surface of the optical lens 10. In the present embodiment, the recess 111 is a conical recess; the side surface 1112 is an axisymmetrical aspheric surface, and the symmetrical axis of the side surface 1112 is coaxial to the optical axis O of the optical lens 10.

The side surface 1112 is defined by the following expression:

$$Z_1 = \frac{c_1 r_1^{\ 2}}{1 + \sqrt{1 - (1 + k_1)c_1^{\ 2} r_1^{\ 2}}} + \alpha_{21} r_1^{\ 4} + \alpha_{31} r_1^{\ 6} + \alpha_{41} r_1^{\ 8} + \alpha_{51} r_1^{\ 10} \qquad (1)$$

wherein $r_1$ is the radial coordinate relative to the optical axis O of a point C on the side surface 1112, $Z_1$ is the surface sag at radial coordinate $r_1$ (i.e. the surface coordinate along the optical axis O, as a function of $r_1$), $c_1$ and $k_1$ are curvature and conic constants for the side surface 1112, and $\alpha_{21}\sim\alpha_{51}$ are the aspheric coefficients of the side surface 1112. In such case, the origin A of the coordinate system is the central peak of the side surface 1112, and the optical axis O of the optical lens 10 lies along the Z-axis. That is, the origin A is the intersection point of the side surface 1112 and the optical axis O of the optical lens 10.

The focal length $f_1$ of the side surface 1112 is less than -0.5 mm, and is defined by the following expression:

$$f_1 = \frac{1}{(N-1)c_1} \qquad (2)$$

wherein N is the refractive index of the main body 100, and $c_1$ is the curvature constant for the side surface 1112.

In the present embodiment, the optical lens 10 is made of polymethyl methacrylate (PMMA), and the refractive index of PMMA is equal to 1.49; $\alpha_{21}\sim\alpha_{51}$ are equal to zero. The values of the parameters for the design of the side surface 1112 are given in listing 1:

| Listing 1 | unit/mm |
|---|---|
| parameter | Operational Value |
| $1/c_1$ | -0.9527445 |
| $k_1$ | -1.600712 |
| $f_1$ | -1.94 |

In alternative embodiments, the optical lens 10 may be made of any other suitable materials, such as polycarbonate (PC), silicone, etc. In other alternative embodiments, there may be at least one zero of $\alpha_{21}\sim\alpha_{51}$.

The second surface 120 is the light exit surface of the optical lens 10. In the present embodiment, the second surface 120 is an axisymmetrical aspheric surface, and the symmetrical axis of the second surface 120 is coaxial to the optical axis O of the optical lens 10. The second surface 120 is defined by the following expression:

$$Z_2 = \frac{c_2 r_2^{\ 2}}{1 + \sqrt{1 - (1 + k_2)c_2^{\ 2} r_2^{\ 2}}} + \alpha_{22} r_2^{\ 4} + \alpha_{32} r_2^{\ 6} + \alpha_{42} r_2^{\ 8} + \alpha_{52} r_2^{\ 10} \qquad (3)$$

wherein $r_2$ is the radial coordinate relative to the optical axis O of a point D on the second surface 120, $Z_2$ is the surface sag at radial coordinate $r_2$ (i.e. the surface coordinate along the optical axis O, as a function of $r_2$), $c_2$ and $k_2$ are curvature and conic constants for the second surface 120, and $\alpha_{22}\sim\alpha_{52}$ are the aspheric coefficients of the second surface 120. In such case, the origin B of the coordinate system is the central peak of the second surface 120, and the optical axis O of the optical lens 10 lies along the Z-axis. That is, the origin B is the intersection point of the second surface 120 and the optical axis O.

In the present embodiment, none of $\alpha_{22}\sim\alpha_{52}$ is equal to zero, and the values of the parameters for the design of the second surface 120 are given in listing 2:

<div align="center">

Listing 2          unit/mm

| Parameter | Operational Value |
|---|---|
| $1/c_2$ | -36.82863 |
| $k_2$ | 10.00017 |
| $\alpha_{22}$ | -0.00019365639 |
| $\alpha_{32}$ | -0.00016984459 |
| $\alpha_{42}$ | 8.4428627E-006($8.4428627\times10^{-6}$) |
| $\alpha_{52}$ | -1.5418757E-007($-1.5418757\times10^{-6}$) |

</div>

In alternative embodiment, there may be at least one zero of $\alpha_{22}\sim\alpha_{52}$.

The focal length F of the optical lens 10 is less than -0.5 mm, and is defined by the following expression:

$$F = \frac{1}{(N-1)(c_1 - c_2 + \frac{H(N-1)c_1 c_2}{N})} \qquad (4)$$

wherein N is the refractive index of the main body 100, $c_1$ and $c_2$ are the respective curvature constants for the side surface 1112 and the second surface 120, and H is the vertical distance between the origin A and the origin B (i.e. the central thickness of the optical lens 10). In the present embodiment, H is equal to 2 mm, F is equal to -2.03mm.

The side surface 1112 and the second surface 120 are configured for modulating the light emitted from the light source 101. That is, the surface characteristics of the side surface 1112 makes the light entering into the main body 100 reach the given position of the second surface 120, and the surface characteristics of the second surface 120 makes the light emit the main body 100 along the given light path, thereby forming a uniform circular light field.

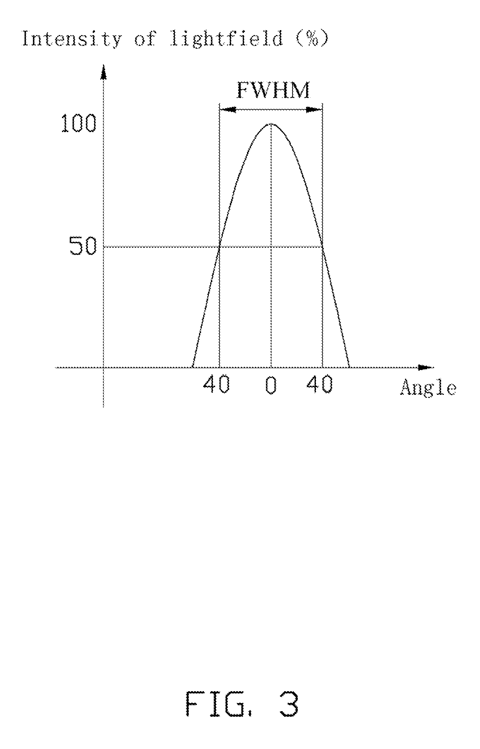

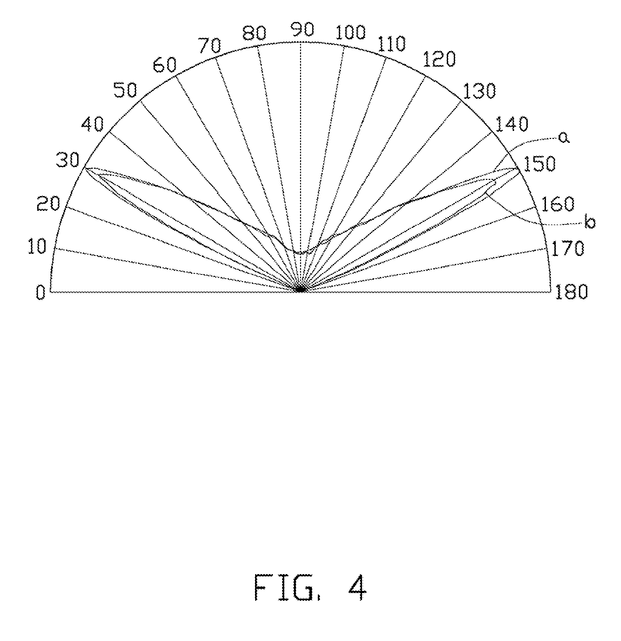

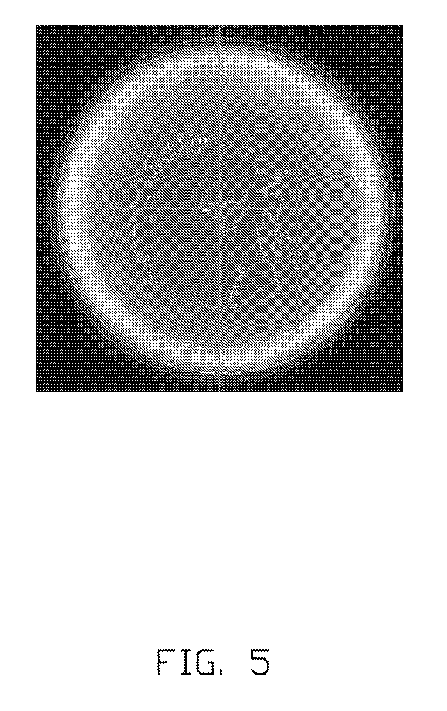

Referring to FIG. 3, the angle of a full width at half maximum (FWHM) of the intensity of a light field, which is formed by the light emitted from the optical lens 10, is larger than 80 degrees. That is, the radiation angle formed by the light, which has the intensity more than or equal to the fifty percents of the maximum intensity of the light field, is larger than 80 degrees. Referring to FIG. 4, the curve a shows the intensity distribution of the light field along the X-axis in X-Y plane, and the radiation angle of the light emitted from the optical lens 10 is larger than positive and negative 60 degrees along the X-axis. The curve b shows the intensity distribution of the light field along the Y-axis in X-Y plane, and the radiation angle of the light emitted from the optical lens 10 is larger than positive and negative 60 degrees along the Y-axis. Thus, the light emitted from the optical lens 10 forms a uniform circular light field (see FIG. 5). In addition, the curve a is basically coincident with the curve b. That is, the light filed along the X-axis is basically similar to the light field along the Y-axis. Meanwhile, the intensity of the light field evenly decreases from the center of the light field to the circumference (see FIG. 5). In other words, the intensity distribution is more uniform.

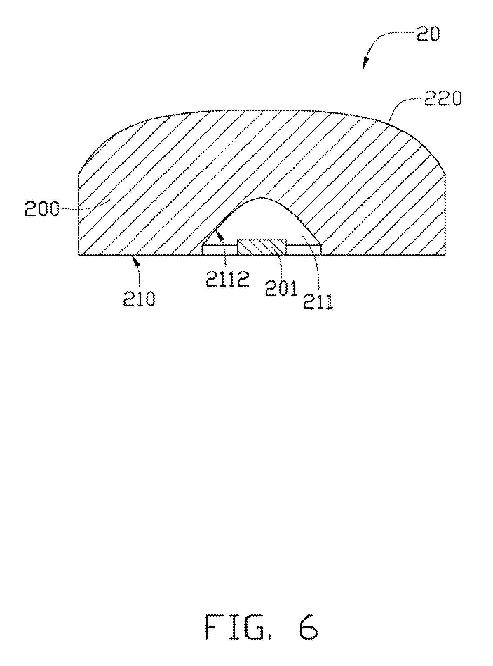

Referring to FIG. 6, an optical lens 20, in accordance with a second embodiment, is shown. The optical lens 20 is configured for modulating light emitted from a light source 201 to make light passing through the optical lens 20 uniform. The optical lens 20 includes a main body 200. The main body 200 includes a first surface 210, and a second surface 220 opposite to the first surface 210. The first surface 210 defines a recess 211 for receiving the light source 201. The light emitted from the light source 201 enters into the main body 200 via the side surface 2112 of the recess 211. In the present embodiment, the side surface 2112 is an axisymmetrical aspheric surface, and the symmetrical axis of the side surface 2112 is coaxial to the optical axis of the optical lens 20.

The side surface 2112 is defined by the expression (1). The focal length $f_1$ of the side surface 2112 is less than -0.5 mm, and is defined by the expression (2). In the present embodiment, $\alpha_{21}\sim\alpha_{51}$ are equal to zero. The values of the parameters for the design of the side surface 2112 are given in listing 3:

Listing 3          unit/mm

| parameter | Operational Value |
|---|---|
| $1/c_1$ | -0.5810215 |
| $k_1$ | -1.475934 |
| $f_1$ | -1.18 |

The second surface 220 is the light exit surface of the optical lens 20, and is defined by the expression (3). In the present embodiment, the second surface 220 is an axisymmetrical aspheric surface, and the symmetrical axis of the second surface 220 is coaxial to the optical axis of the optical lens 20. In the present embodiment, none of $\alpha_{22}$~$\alpha_{52}$ is zero, and the values of the parameters for the design of the second surface 220 are given in listing 4:

Listing 4          unit/mm

| Parameter | Operational Value |
|---|---|
| $1/c_2$ | -42.00507 |
| $k_2$ | 100.0122 |
| $\alpha_{22}$ | -0.0031101848 |
| $\alpha_{32}$ | -8.3012241E-005($-8.3012241 \times 10^{-5}$) |
| $\alpha_{42}$ | 1.1431548E-005($1.1431548 \times 10^{-5}$) |
| $\alpha_{52}$ | -5.4274458E-007($-5.4274458 \times 10^{-7}$) |

In alternative embodiment, there may be at least one zero of $\alpha_{22}$~$\alpha_{52}$.

The focal length F of the optical lens 20 is less than -0.5 mm, and is defined by the expression (4). In the present embodiment, the N is equal to 1.49, the H is equal to 2 mm, F is equal to -1.22mm.

The side surface 2112 and the second surface 220 are configured for modulating the light emitted from the light source 201. That is, the surface characteristics of the side surface 2112 makes the light entering into the main body 200 reach the given position of the second surface 220, and the surface characteristics of the second surface 220 makes the light emit the main body 200 along the given light path, thereby forming a uniform circular light field.

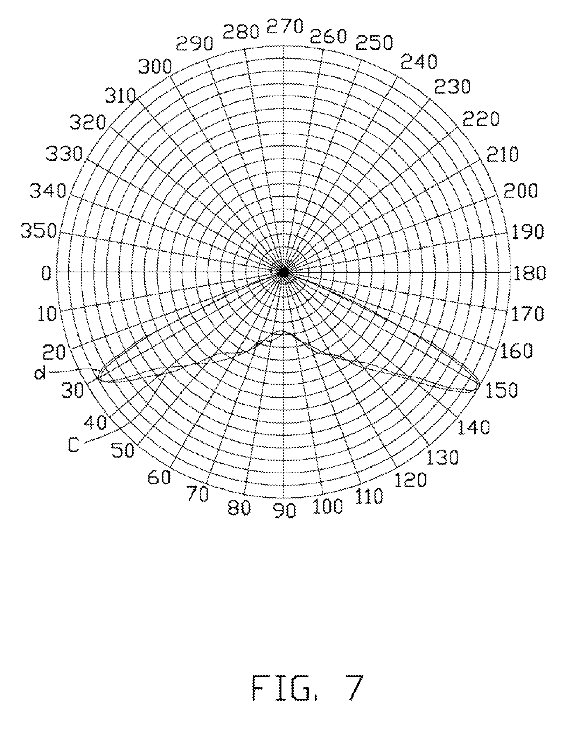

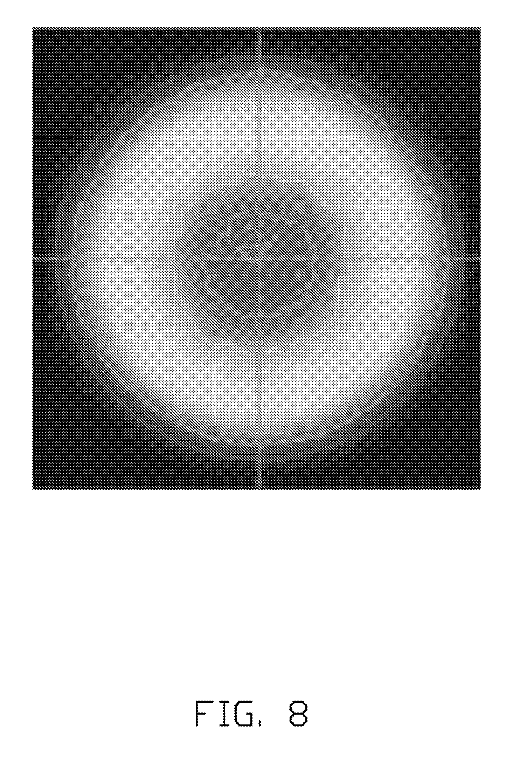

The angle of FWHM of the intensity of a light field, which is formed by the light emitted from the optical lens 20, is larger than 80 degrees. Referring to FIG. 7, the curve c shows the intensity distribution of the light field along the X-axis in X-Y plane, and the radiation angle of the light emitted from the optical lens 20 is larger than positive and negative 65 degrees along the X-axis. The curve d shows the intensity distribution of the light field along the Y-axis in X-Y plane, and the radiation angle of the light emitted from the optical lens 20 is larger than positive and negative 65 degrees along the Y-axis. Thus, the light emitted from the optical lens 20 forms a uniform circular light field (see FIG. 8). In addition, the curve c is basically coincident with the curve d. That is, the light filed along the X-axis is basically similar to the light field along the Y-axis. Meanwhile, the intensity of the light field evenly decreases from the center of the light field to the circumference (see FIG. 8). In other words, the intensity distribution is more uniform.

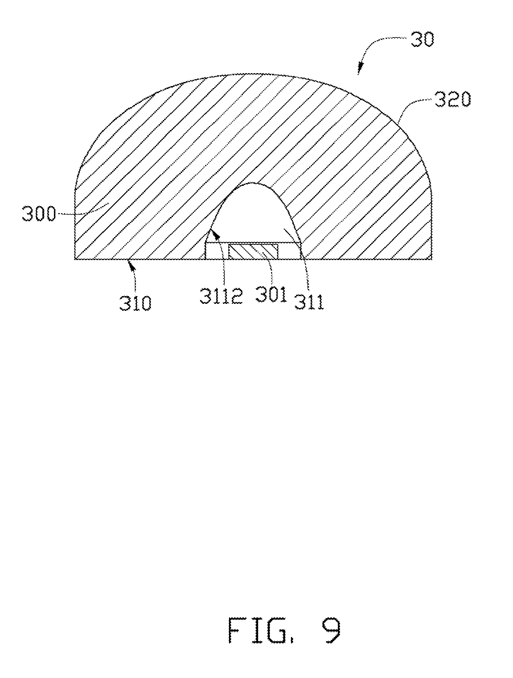

Referring to FIG. 9, an optical lens 30, in accordance with a third embodiment, is shown. The optical lens 30 is configured for modulating light emitted from a light source 301 to make light passing through the optical lens 30 uniform. The optical lens 30 includes a main body 300. The main body 300 includes a first surface 310, and a second surface 320 opposite to the first surface 310. The first surface 310 defines a recess 311 for receiving the light source 301. The light emitted from the light source 301 enters into the main body 300 via the side surface 3112 of the recess 311. In the present embodiment, the side surface 3112 is an axisymmetrical aspheric surface, and the symmetrical axis of the side surface 3112 is coaxial to the optical axis of the optical lens 30.

The side surface 3112 is defined by the expression (1). The focal length $f_1$ of the side surface 3112 is less than -0.5 mm, and is defined by the expression (2). In the present embodiment, none of $\alpha_{21}$~$\alpha_{51}$ is equal to zero. The values of the parameters for the design of the side surface 3112 are given in listing 5:

Listing 5          unit/mm

| Parameter | Operational Value |
|---|---|
| $1/c_1$ | -2.089569 |

(continued)

| Parameter | Operational Value |
|---|---|
| $k_1$ | -1.069433 |
| $f_1$ | -4.25 |
| $\alpha_{21}$ | -0.0029152784 |
| $\alpha_{31}$ | -0.00052501439 |
| $\alpha_{41}$ | $-6.6890495E\text{-}006(-6.6890495 \times 10^{-6})$ |
| $\alpha_{51}$ | $1.7481846E\text{-}007(1.7481846 \times 10^{-7})$ |

The second surface 320 is the light exit surface of the optical lens 30, and is defined by the expression (3). In the present embodiment, the second surface 320 is an axisymmetrical aspheric surface, and the symmetrical axis of the second surface 320 is coaxial to the optical axis of the optical lens 30. In the present embodiment, none of $\alpha_{22}{\sim}\alpha_{52}$ is zero, and the values of the parameters for the design of the second surface 320 are given in listing 6:

Listing 6         unit/mm

| Parameter | Operational Value |
|---|---|
| $1/c_2$ | -21.9694 |
| $k_2$ | 1.28574 |
| $\alpha_{22}$ | $-2.4983696E\text{-}005(-2.4983696 \times 10^{-5})$ |
| $\alpha_{32}$ | $8.2717974E\text{-}008(8.2717974 \times 10^{-8})$ |
| $\alpha_{42}$ | $2.3342983E\text{-}010(2.3342983 \times 10^{-8})$ |
| $\alpha_{52}$ | $-2.1092691E\text{-}012(-2.1092691 \times 10^{-12})$ |

In alternative embodiment, there may be at least one zero of $\alpha_{22}{\sim}\alpha_{52}$.

The focal length F of the optical lens 30 is less than -0.5 mm, and is defined by the expression (4). In the present embodiment, the N is equal to 1.49, the H is equal to 9 mm, F is equal to -5.52mm.

The side surface 3112 and the second surface 320 are configured for modulating the light emitted from the light source 301. That is, the surface characteristics of the side surface 3112 makes the light entering into the main body 300 reach the given position of the second surface 320, and the surface characteristics of the second surface 320 makes the light emit the main body 300 along the given light path, thereby forming a uniform circular light field.

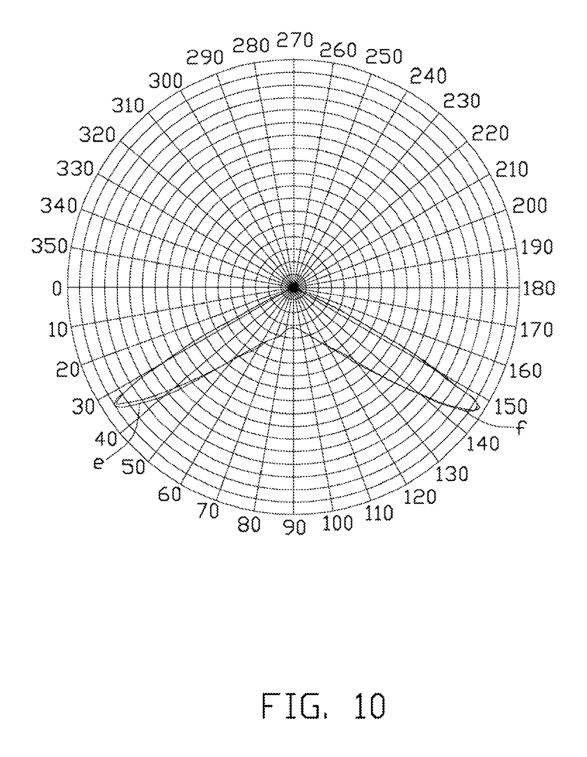

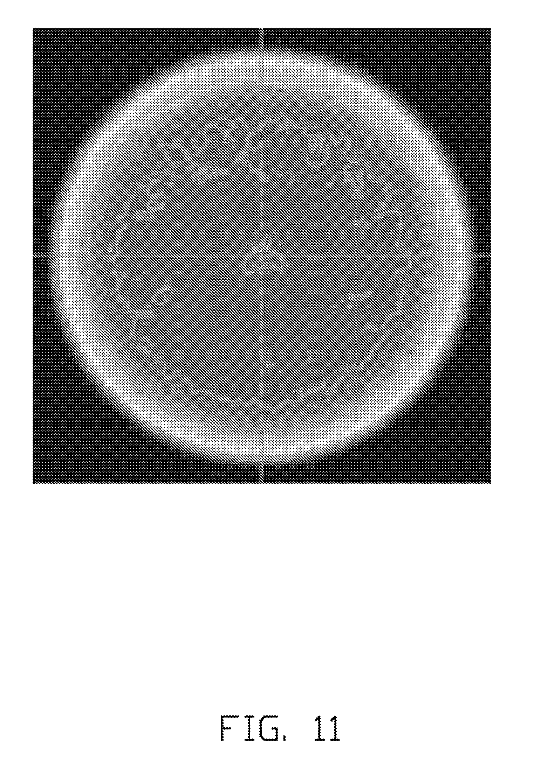

The angle of FWHM of the intensity of a light field, which is formed by the light emitted from the optical lens 30, is larger than 80 degrees. Referring to FIG. 10, the curve e shows the intensity distribution of the light field along the X-axis in X-Y plane, and the radiation angle of the light emitted from the optical lens 30 is larger than positive and negative 62 degrees along the X-axis. The curve f shows the intensity distribution of the light field along the Y-axis in X-Y plane, and the radiation angle of the light emitted from the optical lens 30 is larger than positive and negative 62 degrees along the Y-axis. Thus, the light emitted from the optical lens 30 forms a uniform circular light field (see FIG. 11). In addition, the curve e is basically coincident with the curve f. That is, the light filed along the X-axis is basically similar to the light field along the Y-axis. Meanwhile, the intensity of the light field evenly decreases from the center of the light field to the circumference (see FIG. 11). In other words, the intensity distribution is more uniform.

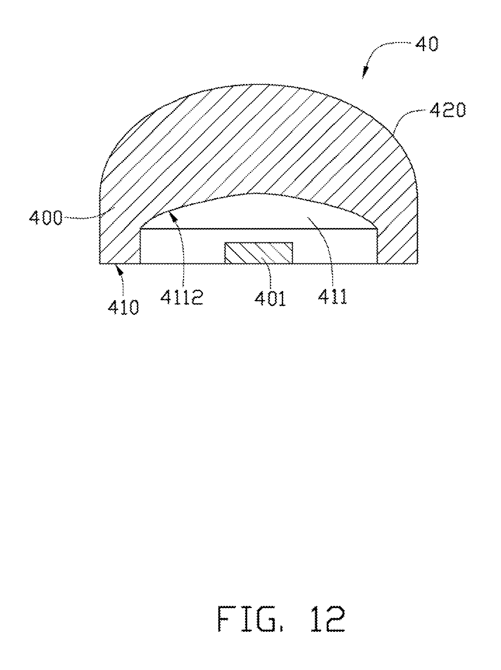

Referring to FIG. 12, an optical lens 40, in accordance with a fourth embodiment, is shown. The optical lens 40 is configured for modulating light emitted from a light source 401 to make light passing through the optical lens 40 uniform. The optical lens 30 includes a main body 400. The main body 400 includes a first surface 410, and a second surface 420 opposite to the first surface 410. The first surface 410 defines a recess 411 for receiving the light source 401. The light emitted from the light source 401 enters into the main body 400 via the side surface 4112 of the recess 411. In the present embodiment, the side surface 4112 is an axisymmetrical aspheric surface, and the symmetrical axis of the side surface 4112 is coaxial to the optical axis of the optical lens 40.

The side surface 4112 is defined by the expression (1). The focal length $f_1$ of the side surface 4112 is less than -0.5 mm, and is defined by the expression (2). In the present embodiment, $\alpha_{21}{\sim}\alpha_{51}$ are equal to zero. The values of the parameters for the design of the side surface 4112 are given in listing 7:

Listing 7                          unit/mm

| Parameter | Operational Value |
|-----------|-------------------|
| $1/c_1$ | -5.035533 |
| $k_1$ | -2.180044 |
| $f_1$ | -10.24 |

The second surface 420 is the light exit surface of the optical lens 40, and is defined by the expression (3). In the present embodiment, the second surface 420 is an axisymmetrical aspheric surface, and the symmetrical axis of the second surface 420 is coaxial to the optical axis of the optical lens 40. In the present embodiment, $\alpha_{22}\sim\alpha_{52}$ are equal to zero, and the values of the parameters for the design of the second surface 420 are given in listing 8:

Listing 8                          unit/mm

| Parameter | Operational Value |
|-----------|-------------------|
| $1/c_2$ | -11.65612 |
| $k_2$ | 0.1223995 |

In alternative embodiment, at least one of $\alpha_{22}\sim\alpha_{52}$ may be zero.

The focal length F of the optical lens 40 is less than -0.5 mm, and is defined by the expression (4). In the present embodiment, the N is equal to 1.49, the H is equal to 9 mm, F is equal to -32.67mm.

The side surface 4112 and the second surface 420 are configured for modulating the light emitted from the light source 401. That is, the surface characteristics of the side surface 4112 makes the light entering into the main body 400 reach the given position of the second surface 420, and the surface characteristics of the second surface 420 makes the light emit the main body 400 along the given light path, thereby forming a uniform circular light field.

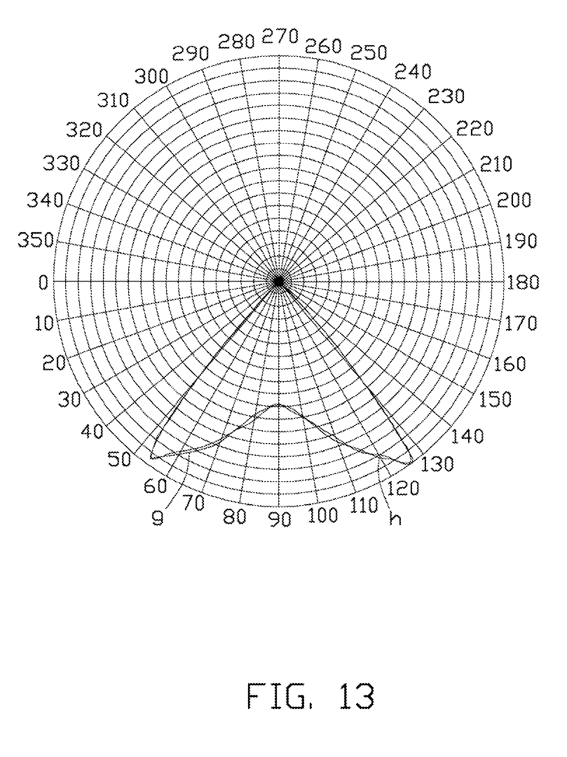

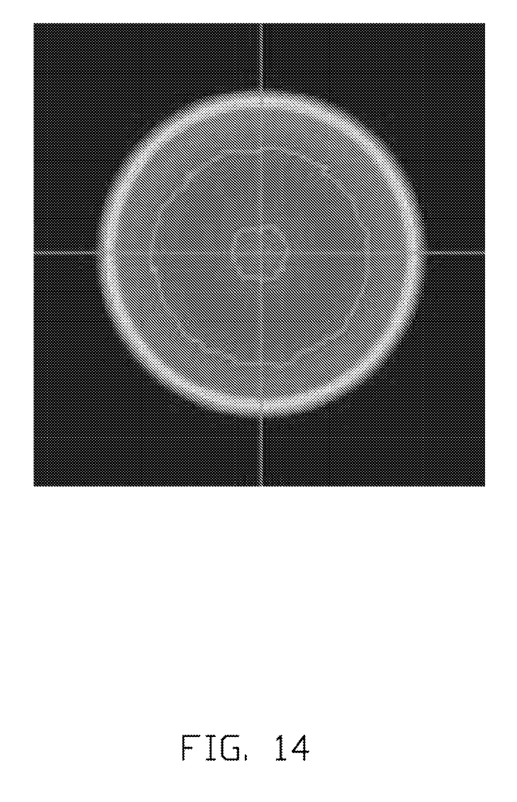

The angle of FWHM of the intensity of a light field, which is formed by the light emitted from the optical lens 40, is larger than 80 degrees. Referring to FIG. 13, the curve g shows the intensity distribution of the light field along the X-axis in X-Y plane, and the radiation angle of the light emitted from the optical lens 30 is larger than positive and negative 41 degrees along the X-axis. The curve h shows the intensity distribution of the light field along the Y-axis in X-Y plane, and the radiation angle of the light emitted from the optical lens 40 is larger than positive and negative 41 degrees along the Y-axis. Thus, the light emitted from the optical lens 40 forms a uniform circular light field (see FIG. 14). In addition, the curve g is basically coincident with the curve h. That is, the light filed along the X-axis is basically similar to the light field along the Y-axis. Meanwhile, the intensity of the light field evenly decreases from the center of the light field to the circumference (see FIG. 14). In other words, the intensity distribution is more uniform.

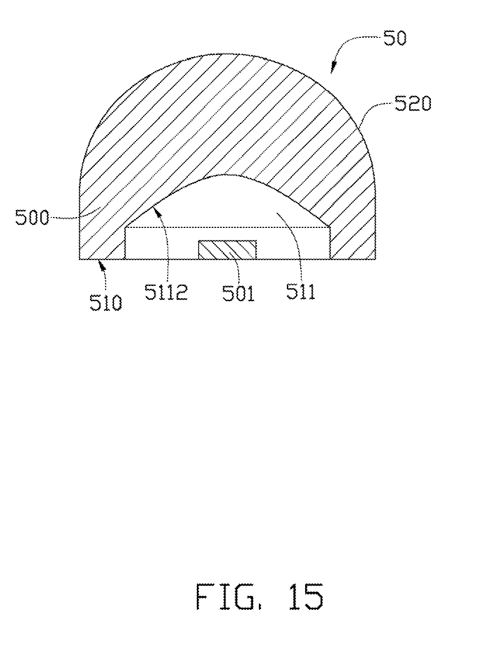

Referring to FIG. 15, an optical lens 50, in accordance with a fifth embodiment, is shown. The optical lens 50 is configured for modulating light emitted from a light source 501 to make light passing through the optical lens 50 uniform. The optical lens 50 includes a main body 500. The main body 500 includes a first surface 510, and a second surface 520 opposite to the first surface 510. The first surface 510 defines a recess 311 for receiving the light source 501. The light emitted from the light source 501 enters into the main body 500 via the side surface 5112 of the recess 511. In the present embodiment, the side surface 5112 is an axisymmetrical aspheric surface, and the symmetrical axis of the side surface 5112 is coaxial to the optical axis of the optical lens 50.

The side surface 5112 is defined by the expression (1). The focal length $f_1$ of the side surface 5112 is less than -0.5 mm, and is defined by the expression (2). In the present embodiment, none of $\alpha_{21}\sim\alpha_{51}$ is equal to zero. The values of the parameters for the design of the side surface 5112 are given in listing 9:

Listing 9                          unit/mm

| Parameter | Operational Value |
|-----------|-------------------|
| $1/c_1$ | -11.30413 |
| $k_1$ | -1.699131 |
| $f_1$ | -22.99 |
| $\alpha_{21}$ | 0.00076875443 |
| $\alpha_{31}$ | -1.5323029E-005($-1.5323029\times10^{-5}$) |

(continued)

| Parameter | Operational Value |
|-----------|-------------------|
| $\alpha_{41}$ | -1.446029E-007($-1.446029\times10^{-7}$) |
| $\alpha_{51}$ | -6.1366035E-010($-6.1366035\times10^{-10}$) |

The second surface 520 is the light exit surface of the optical lens 50, and is defined by the expression (3). In the present embodiment, the second surface 520 is an axisymmetrical aspheric surface, and the symmetrical axis of the second surface 520 is coaxial to the optical axis of the optical lens 50. In the present embodiment, $\alpha_{22}\sim\alpha_{52}$ are equal to zero, and the values of the parameters for the design of the second surface 520 are given in listing 10:

Listing 10            unit/mm

| Parameter | Operational Value |
|-----------|-------------------|
| $1/c_2$ | -18.53094 |
| $k_2$ | 1.022842 |

In alternative embodiment, there may be at least one zero of $\alpha_{22}\sim\alpha_{52}$.

The focal length F of the optical lens 50 is less than -0.5 mm, and is defined by the expression (4). In the present embodiment, the N is equal to 1.49, the H is equal to 9 mm, F is equal to -100 mm.

The side surface 5112 and the second surface 520 are configured for modulating the light emitted from the light source 501. That is, the surface characteristics of the side surface 5112 makes the light entering into the main body 500 reach the given position of the second surface 520, and the surface characteristics of the second surface 520 makes the light emit the main body 500 along the given light path, thereby forming a uniform circular light field.

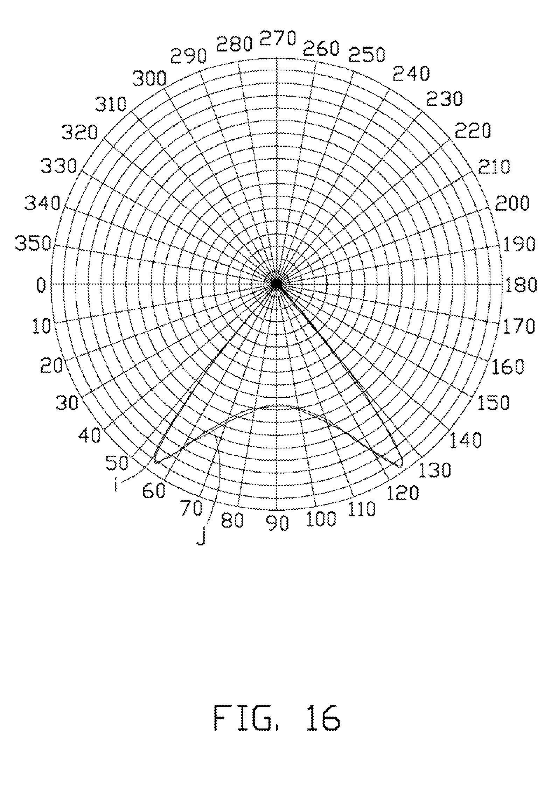

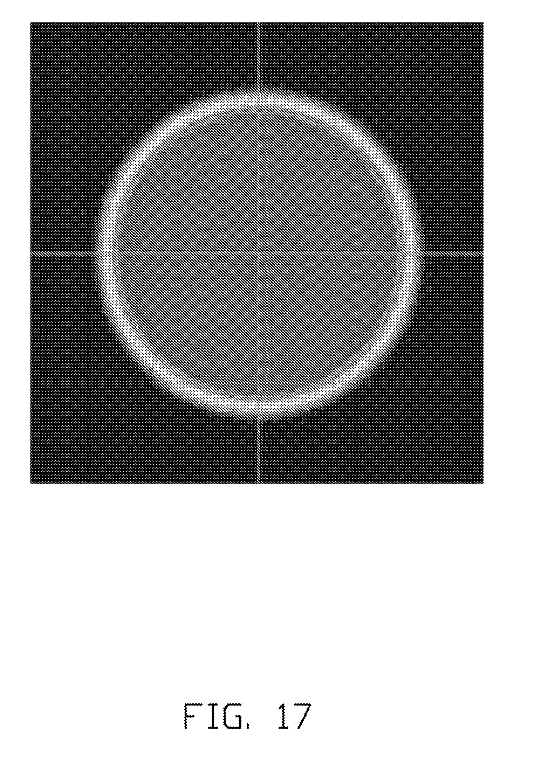

The angle of FWHM of the intensity of a light field, which is formed by the light emitted from the optical lens 50, is larger than 80 degrees. Referring to FIG. 16, the curve i shows the intensity distribution of the light field along the X-axis in X-Y plane, and the radiation angle of the light emitted from the optical lens 50 is larger than positive and negative 41 degrees along the X-axis. The curve j shows the intensity distribution of the light field along the Y-axis in X-Y plane, and the radiation angle of the light emitted from the optical lens 50 is larger than positive and negative 41 degrees along the Y-axis. Thus, the light emitted from the optical lens 50 forms a uniform circular light field (see FIG. 17). In addition, the curve i is basically coincident with the curve j. That is, the light filed along the X-axis is basically similar to the light field along the Y-axis. Meanwhile, the intensity of the light field evenly decreases from the center of the light field to the circumference (see FIG. 17). In other words, the intensity distribution is more uniform.

While certain embodiments have been described and exemplified above, various other embodiments will be apparent to those skilled in the art from the foregoing disclosure. The disclosure is not limited to the particular embodiments described and exemplified but is capable of considerable variation and modification without departure from the scope and spirit of the appended claims.

**Claims**

1. An optical lens for modulating light emitted from a light source to form a circular light field, comprising:

   a first surface, the first surface defining a recess for receiving the light source, the recess having a side surface as a light entrance surface; and
   a second surface opposite to the first surface, the second surface being a light exit surface,
   wherein the side surface and the second surface cooperatively modulate the light from the light source, such that an angle of a full width at half maximum of the intensity of a light field, which is formed by the light emitted from the optical lens, is larger than 80 degrees.

2. The optical lens of claim 1, wherein the side surface and the second surface are axisymmetrical aspheric surfaces, and the symmetrical axes of the side surface and the second surface are coaxial to the optical axis of the optical lens.

3. The optical lens of claim 1 or claim 2, wherein the side surface and the second surface are defined by the following expression:

$$Z = \frac{c\,r^2}{1+\sqrt{1-(1+k)c^2 r^2}} + \alpha_2 r^4 + \alpha_3 r^6 + \alpha_4 r^8 + \alpha_5 r^{10}$$

wherein r is the radial coordinate of a point on the side surface/ the second surface relative to the optical axis of the optical lens, Z is the surface sag at radial coordinate r, c and k are curvature and conic constants for the side surface/the second surface, and $\alpha_2$~$\alpha_5$ are the aspheric coefficients of the side surface/the second surface, the origin of the coordinate system for the side surface/the second surface is the intersection point of the side surface/the second surface and the optical axis of the optical lens.

4. The optical lens of claim 3, wherein $\alpha_2$~$\alpha_5$ for the side surface are equal to zero.

5. The optical lens of claim 4, wherein $\alpha_2$~$\alpha_5$ for the second surface are equal to zero.

6. The optical lens of claim 3, wherein none of $\alpha_2$~$\alpha_5$ for the side surface is equal to zero.

7. The optical lens of claim 6, wherein none of $\alpha_2$~$\alpha_5$ for the second surface is equal to zero.

8. The optical lens of claim 6 or claim 7, wherein the focal length $f_1$ of the side surface is less than -0.5 mm, and is defined by the following expression:

$$f_1 = \frac{1}{(N-1)c_1}$$

wherein N is the refractive index of the optical lens, and $c_1$ is the curvature constant for the side surface.

9. The optical lens of any preceding claim, wherein the focal length F of the optical lens is less than -0.5 mm, and is defined by the following expression:

$$F = \frac{1}{(N-1)(c_1 - c_2 + \dfrac{H(N-1)c_1 c_2}{N})}$$

wherein N is the refractive index of the optical lens, $c_1$ and $c_2$ are the respective curvature constants for the side surface and the second surface, and H is the central thickness of the optical lens.

10. An optical lens for modulating light emitted from a light source to form a circular light field, comprising:

a first surface, the first surface defining a recess for receiving the light source, the recess having a side surface as a light entrance surface; and
a second surface opposite to the first surface, the second surface being a light exit surface;
wherein the focal length F of the optical lens is less than -0.5 mm, and the side surface and the second surface are defined by the following expression:

$$Z = \frac{c\,r^2}{1+\sqrt{1-(1+k\,)c^{\,2}r^{\,2}}} + \alpha_2 r^{\,4} + \alpha_3 r^{\,6} + \alpha_4 r^{\,8} + \alpha_5 r^{\,10}$$

wherein r is the radial coordinate of a point on the side surface/the second surface relative to the optical axis of the optical axis, Z is the surface sag at radial coordinate r, c and k are curvature and conic constants for the side surface/the second surface, and $\alpha_2$~$\alpha_5$ are the aspheric coefficients of the side surface/the second surface, the origin of the coordinate system for the side surface/the second surface is the intersection point of the side surface/the second surface and the optical axis of the optical lens.

11. The optical lens of claim 10, wherein the side surface and the second surface are axisymmetrical aspheric surfaces, and the symmetrical axes of the side surface and the second surface are coaxial to the optical axis of the optical lens.

12. The optical lens of claim 11, wherein $\alpha_2$~$\alpha_5$ for the side surface are equal to zero.

13. The optical lens of claim 11, wherein none of $\alpha_2$~$\alpha_5$ for the side surface is equal to zero.

14. The optical lens of any one of claims 10 to 13, wherein the focal length $f_1$ of the side surface is less than -0.5 mm, and is defined by the following expression:

$$f_1 = \frac{1}{(N-1)c_1}$$

wherein N is the refractive index of the optical lens, and $c_1$ is the curvature constant for the side surface.

15. The optical lens of any one of claims 10 to 14, wherein the focal length F of the optical lens is less than -0.5 mm, and is defined by the following expression:

$$F = \frac{1}{(N-1)(c_1 - c_2 + \frac{H(N-1)c_1 c_2}{N})}$$

wherein N is the refractive index of the optical lens, $c_1$ and $c_2$ are the respective curvature constants for the side surface and the second surface, and H is the central thickness of the optical lens.

FIG. 1

FIG. 2

Intensity of lightfield (%)

FIG. 3

FIG. 4

FIG. 5

FIG. 6

FIG. 7

FIG. 8

30

320

300

310  3112 301 311

FIG. 9

FIG. 10

FIG. 11

40

420

400

410 4112 401 411

FIG. 12

FIG. 13

FIG. 14

FIG. 15

FIG. 16

FIG. 17